# EUROPEAN PATENT APPLICATION

(11) **EP 1 317 082 A2**
(43) Date of publication of application: **04.06.2003**
(21) Application number: 02102667.9
(22) Date of filing: 29.11.2002
(51) Int. Cl.: H04B 7/26

(54) **Method and base station for speech transmission**

(30) Priority: 30.11.2001 FI 20012354
(71) Applicant: Nokia Corporation, 02150 Espoo (FI)
(72) Inventor: Torvinen, Marko, 02810 Espoo (FI); Pulkkinen, Jani, 02760 Espoo (FI)
(74) Representative: Äkräs, Tapio Juhani

(57) **Abstract**

The invention relates to a method for transmitting speech in a time division multiple access TDMA communications system. In the invention, at a base station a TDMA frame consisting of N time slots is received over an air interface, said time slots carrying encoded speech information bits, the speech information bits of said N air interface time slots being transferred over a single PCM transmission channel from said base station to another network element. In the step of transferring, all speech information bits of a received air interface time slot are transferred in R consecutive PCM time slots such that each of said consecutive PCM time slots contains bits only from said air interface time slot, wherein R≥N1/M, N1 is the number of speech information bits in the air interface time slot and M corresponds to the number of bits employed for transferring of speech information bits in each PCM time slot.

## Description

### FIELD OF THE INVENTION

The present invention relates to communications systems, and more particularly to mechanisms for speech transmission in a mobile radio network.

### BACKGROUND OF THE INVENTION

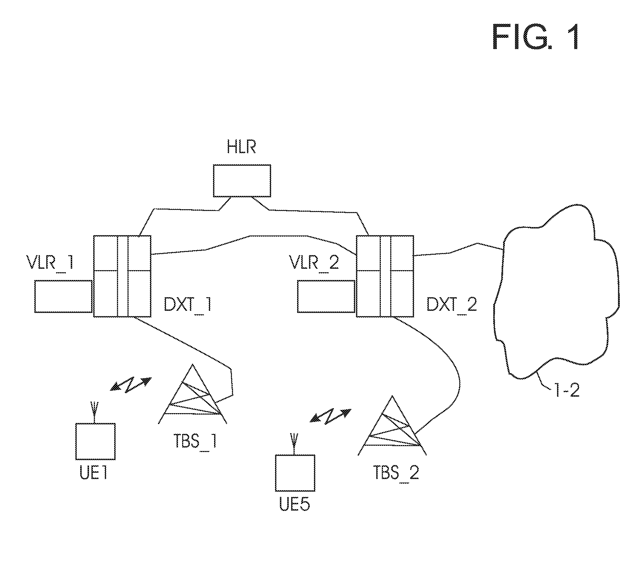

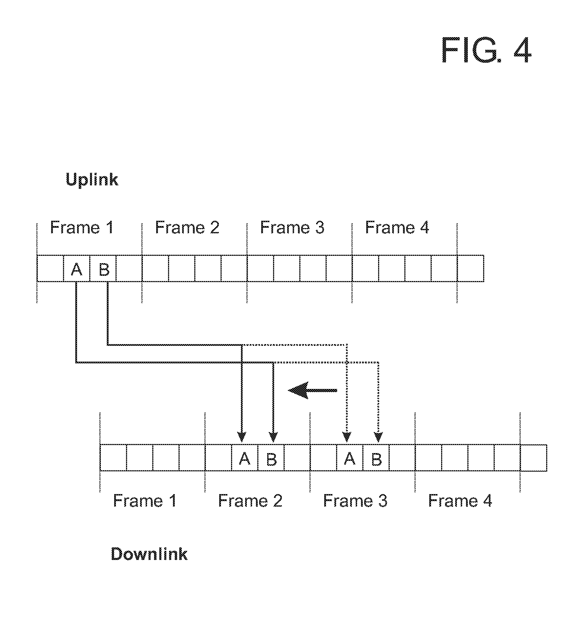

The TETRA (TErrestrial Trunked RAdio) system is a digital mobile communications system developed primarily for public safety and security, for public trunking operators, and for utilities and industry. A typical TETRA network architecture, as illustrated in Figure 1, comprises digital exchanges DXT_1, DXT_2 (DXT, Digital Exchange for TETRA) to which base stations TBS_1, TBS_2 (TBS, TETRA Base Station) are connected. The TETRA network may utilize a distributed subscriber database structure such that there is a home location register HLR or a home database HDB, which comprises permanent information about the individual and/or group subscribers in a subscribers' home network, and a visitor location register VLR_1, VLR_2 or a visitor database (VDB), which comprises temporary information about individual and/or group subscribers UE_1, UE_5 (UE, User Equipment) registered to the network. Typically, each DXT is provided with a VLR/VDB. One or more of the DXTs (DXT_2) may provide a gateway to other communications networks 1-2.

Regarding the invention, the operation and structure of the TETRA system are described only to a degree that will assist in comprehending the reducing of the speech delay according to the invention and its embodiments. As for a more detailed description of the TETRA system, reference is made to the ETSI (European Telecommunications Standards Institute) TETRA specifications that are available on the ETSI home site, at www.etsi.org.

TETRA is also a TDMA (Time Division Multiple Access) system. It means that in the TETRA system, several signals may be interleaved in time for transmission over a common channel. In the TETRA system the physical channel, the connection of a TETRA terminal to the TETRA network, is a timeslot.

A TDMA frame in the air channel comprises four timeslots, each being 14.167 ms long. A time slot carrying speech contains 60 ms of compressed speech. The TETRA TDMA frame is thus 56.67 ms long. However, the traffic channel frames a base station receives over the air interface from the TETRA terminals UE_1...UE_5 are transmitted as 60 ms blocks at a rate of 8 kbps in a fixed network, so conversion and/or adaptation of frame sizes and speed have to be carried out. This/these may lead to unnecessary delay.

60 ms is the length of a frame in which speech is transmitted in the fixed network. It is also the frame rate for speech decoding in audio and PSTN (Public Switched Telephone Network) interfaces.

The transmission in the fixed network may be implemented by pulse code modulation, PCM, technique. The PCM technique is time division technique, and according to the European standards data can be transmitted at a rate of 64 kbps in one PCM slot. One PCM frame has 32 slots of 8 bits and thus the duration of 125 µs and speed of about 2Mbps.

Speech transport encoding (STE) is utilised when speech is transmitted between network elements and between networks. A typical TETRA system NTS (Nokia TETRA System) uses the STE encoding system based on the TETRA 09.54 input paper titled *"Mapping of Traffic Channels on Inter System Interface".*

In the typical TETRA system, different speech encoding methods may be used. The FSTE (First Speech Transport Encoding) coding format uses the coding method presented in the above-mentioned input paper TETRA 09.54. In the FSTE, the base station converts frames received from the air channel into 60 ms STE frames to be transmitted in the fixed network. But if the speech is transmitted back over an air interface, i.e. when speech is transmitted e.g. first from the mobile terminal UE_1 to the exchange DXT_1 via a base station and then from said exchange to another mobile terminal UE_5 via another base station, additional buffering is required to overcome the time gap of the 18^{th} frame of the 18-frame-long TETRA multiframe. The time delay caused by the buffering decreases the quality of speech.

An OSTE (Optimised Speech Transport Encoding) coding method removes the need for buffering caused by different frame rates of the communication over the air interface and in the fixed network. In a system using the OSTE speech coding, frames are transmitted over the fixed network at the same rate as they are received from the air interface at 56.67 ms intervals. Also the TDMA frame number is transmitted within each speech block so that the time gap of the 18^{th} frame can be dealt with optimally.

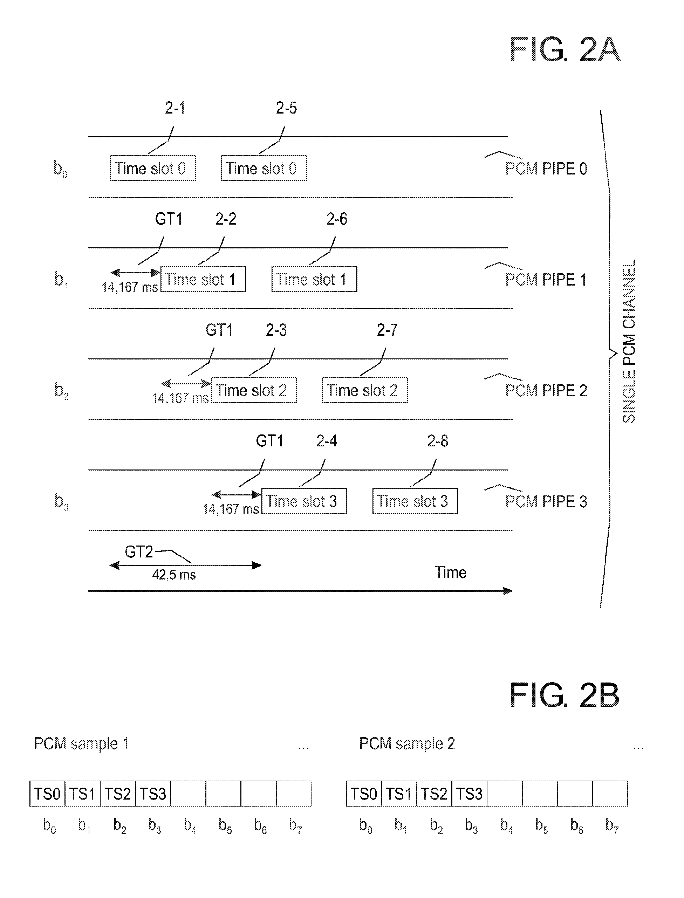

Figure 2A illustrates the transmission of the four TDMA timeslots in a single PCM channel according to prior art. This is possible since the rate of encoded speech is lower than ¼ x 64 kbit/s, so transmission capacity can be saved.

In the prior art method TDMA timeslots from the air interface are transmitted in sequential form in a PCM channel. The first bit of the first radio interface timeslot 2-1 (from the first TETRA terminal) is transmitted by the first PCM sample bit b0 in the fixed network. The first bit of the second air interface timeslot 2-2 (from the second TETRA terminal) is transmitted by the second bit b1 of the first PCM sample. The first bits of the third 2-3 and the fourth 2-4 air interface timeslots (from the third and the fourth TETRA terminals) are transmitted by the third bit b2 and the fourth bit b3 of the first PCM sample in the fixed network, respectively. The following four PCM bits b4...b7 are for control channel and signaling purposes.

The second PCM sample of the speech comprises the next second four bits from air interface timeslots 1 ... 4 (possibly from 4 different users). The third PCM sample of the speech comprises the next third four bits from air interface timeslots 1 ... 4, etc. This transmission continues, i.e. air interface timeslots 2-1 ... 2-4 are transmitted bit by bit, until all the (274) bits of those air interface timeslots are transmitted. Next, air interface timeslots 2-5 ... 2-8 are transmitted likewise, and so on. As can be seen from Figure 2B, each PCM sample may comprise four bits from an octet for speech in DXT - TBS transmission.

The guarding time GT1 between the start of two subsequent different air interface timeslots is 14.167 ms. Thus a time gap GT2 from the beginning of the first PCM bit b0 (PCM pipe 0) used for transmission of the first air interface timeslot 2-1 until the first bit b3 (PCM pipe 3) assigned for the fourth air interface timeslot 2-4 can be transmitted is about 42.5 ms.

Despite the above-mentioned coding methods speech delays may still be too long and using the existing coding methods no desired further improvement is possible.

### BRIEF DISCLOSURE OF THE INVENTION

It is thus an object of the present invention to provide a method and an apparatus for implementing the method so as to alleviate the above mentioned disadvantage.

The objects of the invention are achieved by a method of speech transmission in a time division multiple access TDMA communications system, said method comprising

Receiving, at a base station a TDMA frame consisting of N time slots over an air interface, said time slots carrying encoded speech information bits,
transferring the speech information bits of said N air interface time slots over a single PCM transmission channel from said base station to another network element, said step of transferring further comprising
transferring all speech information bits of a received air interface time slot in R consecutive PCM time slots such that each of said consecutive PCM time slots contains bits only from said air interface time slot, wherein R≥N1/M, N1 being the number of speech information bits in the air interface time slot and M corresponding to the number of bits employed for transferring speech information bits in each PCM time slot.

Another aspect of the invention is a base station for a time division multiple access TDMA communications system, said base station comprising
means for receiving a TDMA frame consisting of N time slots over an air interface, said time slots carrying encoded speech information bits,
means for transferring the speech information bits of said N air interface time slots over a single PCM transmission channel to another network element, said means for transferring comprising means for transferring all speech information bits of a received air interface time slot in R consecutive PCM time slots such that each of said consecutive PCM time slots contains bits only from said air interface time slot, wherein R≥N1/M, N1 being the number of speech information bits in the air interface time slot and M corresponding to the number of bits employed for transferring speech information bits in each PCM time slot.

Preferred embodiments of the invention are disclosed in the dependent claims.

In the preferred embodiment of the invention, the air interface timeslot is divided into smaller, equally sized sub-timeslots. These sub-slots are then transmitted in parallel by a number of PCM bits, the number equaling the number of sub-timeslots.

An advantage of the invention is the achieved delay spread improvement of about 42.5 ms. This, in turn, gives the possibility to provide timeslots for transmission one frame earlier, which improves the quality of speech.

### BRIEF DESCRIPTION OF THE DRAWINGS

In the following, the invention will be described in greater detail by means of the preferred embodiments and with reference to the accompanying drawings, in which
Figure 1 illustrates an architecture of a typical TETRA system;
Figures 2A and 2B illustrate the transmission of the four timeslots in a current PCM pipe;
Figures 3A and 3B illustrates how the four bits are used for transmitting one timeslot; and
Figure 4 shows how speech delay reduction is achieved.

### DETAILED DESCRIPTION OF THE INVENTION

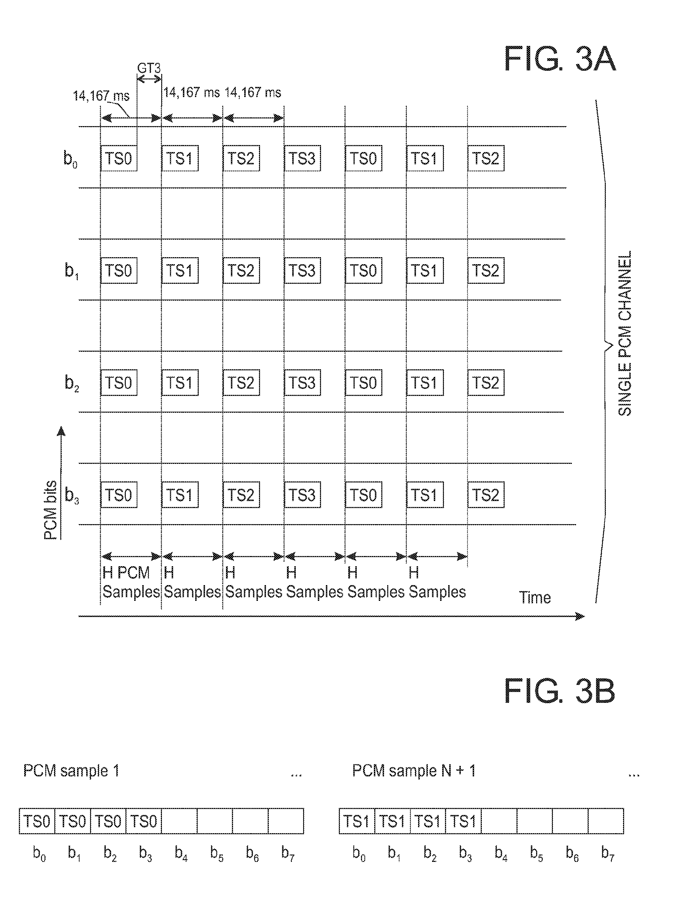

Figures 3A and 3B show how four out of the eight PCM bits are used for transmitting bits of one air interface timeslot. Each air interface timeslot TS0-TS3 is subdivided into four subslots of 69 bits each. One bit from each subslot of the air interface timeslot TS0 (e.g. from a first TETRA terminal) is transferred in parallel by bits b0...b3 of the first PCM time slot (PCM sample) in the PCM transmission channel. The next bit from each subslot of the air interface time slot TS0 is then transferred by bits b0...b3 of the second PCM time slot. This is repeated until all 274 bits of the radio interface time slot TS0 have been transferred; this requires 69 PCM samples, i.e. a number equaling to the number of bits in the subslots. Thus, the time required for transmitting one radio interface time slot is shorter than the guarding time GT1=14.167ms between two consecutive air interface time slots and, therefore, there is an empty gap GT3 between the consecutive air interface time slots. During the empty gap GT3, PCM samples with stuff bits or other information are transmitted until the next air interface time slot, i.e. TS1, begins. The total number of PCM time slots required for transferring one air interface time slot + GT3 is H. When the next air interface time slot TS1 (e.g. from a second TETRA terminal) begins, one bit from each subslot of the air interface timeslot TS1 is again transferred in parallel by bits b0...b3 of the next PCM time slot (PCM sample) H+1 in the PCM transmission channel, then the next bit from each subslot by bits b0...b3 of the PCM time slot H+2, etc., until all 274 bits of the radio interface time slot TS1 have been transferred. The bits of the air interface time slot TS2 (e.g. from a third TETRA terminal), and finally, those of the air interface time slot TS3 (e.g. from a fourth TETRA terminal), are transmitted similarly. Next after 4H PCM samples have been sent, a new transmission cycle is started by transferring the bits of the next air interface time slot TS0 received over the air interface. The transmission of the 274 bits of a single air channel takes about 14.167 ms. An improved speech delay reduction system OSTE requires that the reduction of speech delays can only take place in steps of about 56.67 ms due to the frame structure. With the method of the invention, each air interface timeslot is subdivided into four subslots, which are transmitted in parallel, and no gaps exist between different PCM pipes (the PCM bit b0-b3) unlike in Figure 2. The timeslot division results in each air interface timeslot benefiting about 42.5 ms, transmission delays in the fixed network to be reduced to the one fourth (14,167 ms) of the delay, and an air interface slot to be able to reach an earlier downlink air interface frame. This improvement is distinct in actual speech delay measurements.

Figure 4 shows four uplink (from a terminal to a base station) air interface frames and four downlink (from a base station to a terminal) air interface frames. Each of said air interface frames comprises four timeslots. By using the OSTE encoding method, the uplink slots A and B of an exemplanary duplex call between two subscribers of the first uplink air interface frame are, after having been transferred from a first base station to a second base station in manner described above and after the air interface time slot has been restored from the subslots, delivered in the downlink air interface frame 3 in a downlink direction. According to the invention and its embodiments, it is now possible to transmit the uplink slots A and B of the first uplink air interface frame along the second downlink air interface frame, i.e. one frame earlier than previously. The described speech delay reduction is optimal for TETRA systems, because according to the invention and its embodiments, the very first possible frame for further downlink transmission can now be reached. With the existing mechanisms, transmission delays could not be shortened any more.

The proposed method requires a certain amount of intelligence from the switching field, because the data does not arrive at the switching field in a circuit-switched format but rather in a semi-packet-switched format. For example, a switching panel may be used which is able to handle the speech items in the semi-packet format intelligently, i.e. switch them to the right timeslot for further transmission. These packets are addressed to a certain timeslot of the air interface. The switching field may also be implemented by multiplying the present switching capacity by four.

It will be obvious to a person skilled in the art that, as technology advances, the inventive concept can be implemented in various ways. The invention and its embodiments are not limited to the examples described above but may vary within the scope of the claims.

## Claims

1. A method for transmitting speech in a time division multiple access TDMA communications system, said method comprising
receiving, at a base station, a TDMA frame consisting of N time slots over an air interface, said time slots carrying encoded speech information bits,
transferring the speech information bits of said N air interface time slots over a single PCM transmission channel from said base station to another network element,
**characterized by** said step of transferring comprising
transferring all speech information bits of a received air interface time slot in R consecutive PCM time slots such that each of said consecutive PCM time slots contains speech information bits only from said air interface time slot, wherein R≥N1/M, N1 being the number of speech information bits in the air interface time slot and M corresponding to the number of bits employed for transferring speech information bits in each PCM time slot.

2. A method according to claim 1, **characterized by** said step of transferring comprising
subdividing each received air interface time slot into M sub-time slots of a substantially equal size,
transferring all speech information bits of said received air interface time slot in R consecutive PCM time slots such that each PCM time slot contains one bit from each sub-time slot of said air interface time slot.

3. A method according to claim 1 or 2, **characterized in that** N=4 and M=4.

4. A method according to any one of claims 1, 2 or 3, **characterized by**
i) receiving an air interface timeslot from a terminal to a first base station over the air interface;
ii) subdividing, at the first base station the air interface timeslot into substantially equally sized subtimeslots, the number of subtimeslots equalling M corresponding to the number of bits employed for transferring speech information bits in each PCM time slot;
iii) transmitting all data bits of the subslots over a PCM transmission channel from said base station to another network element before transmitting any data bits of the next air interface time slot from said base station to the other network element;
iv) repeating steps i, ii and iii for each time slot of each air interface frame received at the first base station.

5. A method according to claim 4, **characterized in that** said other network element is a second base station, and by
restoring the air interface time slot structure from the received subslots,
transmitting the restored air interface time slot from said second base station to a destined terminal over an air interface.

6. A base station for a time division multiple access TDMA communications system, said base station comprising
means for receiving a TDMA frame consisting of N time slots over an air interface, said time slots carrying encoded speech information bits,
means for transferring the speech information bits of said N air interface time slots over a single PCM transmission channel to another network element,
**characterized by** said means for transferring comprising transfer means all speech information bits of a received air interface time slot in R consecutive PCM time slots such that each of said consecutive PCM time slots contains speech information bits only from said air interface time slot, wherein R≥N1/M, N1 being the number of speech information bits in the air interface time slot and M corresponding to the number of bits employed for transferring of speech information bits in each PCM time slot.

7. A base station according to claim 6, **characterized in that** said transfer means further comprises
means for subdividing each received air interface time slot into M sub-time slots of a substantially equal size,
means for transferring all speech information bits of said received air interface time slot in R consecutive PCM time slots such that each PCM time slot contains one bit from each sub-time slot of said air interface time slot.

8. A base station according to claim 6 or 7, **characterized in that** N=4 and M=4.

9. A base station according to any one of claims 6, 7 or 8, **characterized in that** said transfer means comprises
means for subdividing any air interface timeslot received over the air interface into substantially equally sized subtimeslots, the number of subtimeslots equalling M corresponding to the number of bits employed for transferring speech information bits in each PCM time slot; and
means for transferring all data bits of the subslots over a PCM transmission channel from said base to another network element before transmitting any data bits of the next air interface time slot from said base station to the other network element.

10. A base station according to claim 9, **characterized in that** said base station comprises means for receiving data bits of subslots over a PCM transmission channel from another base station, means for restoring the air interface time slot structure from the received subslots, and means for transmitting the restored air interface time slot from said second base station to a destined terminal over an air interface.
